# EUROPEAN PATENT APPLICATION

(11) **EP 1 798 893 A1**
(43) Date of publication of application: **20.06.2007**
(21) Application number: 05301051.8
(22) Date of filing: 14.12.2005
(51) Int. Cl.: H04L 12/24, H04L 12/26

(54) **Method and device for device insertion discovery**

(71) Applicant: Thomson Licensing, 92100 Boulogne-Billancourt (FR)
(72) Inventor: Heen, Olivier, 35410 Domloup (FR); Lelievre, Sylvain, 35760 Montgermont (FR); Maetz, Yves, 35520 Melesse (FR)
(74) Representative: Ruellan-Lemonnier, Brigitte

(57) **Abstract**

In a SmartRight™ network (100), a device (110, 120) is not always aware that it is inserted into the network (100). According to the invention, the device (110, 120) repeatedly sends Restart messages (111, 112, 121, 122, 123, 124) and concludes that it is inserted into the network (100) if it receives a response (113) to these messages. Advantageous embodiments comprise having a random interval between two messages, and having a shorter interval (T1) between messages when the device (110, 120) is not connected than when it is connected to the network (100). Further, a Progenitor device concludes that it is connected upon reception of any SmartRight™ message. The invention, which claims a method and a device, provides a network independent solution to the insertion detection problem.

## Description

### FIELD OF THE INVENTION

The present invention relates generally to detection of device insertion, and particularly to detection of device insertion in SmartRight™ compliant networks.

### BACKGROUND OF THE INVENTION

When a device is inserted in a network compliant with SmartRight™ (Technical white paper, v.1.7, January 2003, www.smartright.org), a process is launched in order to check network consistency - all devices in a certain network should share a network key - and, if the device is new to the network, to initialize its security module, e.g. a smartcard, with the network key. The consistency process is launched by sending a so-called Restart message to all the devices in the network, generally using a broadcast capable messaging system.

A problem is that a device is not always aware of its insertion as the lower layers fail to pass the information upwards, which means that a device is not always able to detect its own insertion and launch the consistency process.

A solution to this problem is found in the IEEE 1394 SmartRight™ implementation, where the "bus reset" signal guarantees that when a new device is inserted, notification of this is guaranteed to all devices, including the new one.

French patent applications FR 2868643 and FR 2868644 both teach solutions based on properties of the IP layers, for the case where an IP network is used.

While all of these solutions work well for their field of application, it can be appreciated that they are limited to that field and that it is desirable to find a network independent solution for informing a device of its insertion in a SmartRight™ network. The present invention provides such a solution.

### SUMMARY OF THE INVENTION

In a first aspect, the present invention relates to a method for discovery of device insertion into a SmartRight™ network. A device sends a Restart message and concludes that it is inserted in the network if it receives a response to the Restart message.

In a preferred embodiment, the sending step is repeated continuously. It is advantageous that the interval between two Restart messages is random. It is also advantageous that the interval between two Restart messages sent by the device when it is not connected to the network is shorter than the interval between two Restart messages sent when it is connected to the network.

In a second preferred embodiment, particularly suited for a Progenitor device, the device concludes that it is inserted in the network if it receives any SmartRight™ message.

In a second aspect, the present invention relates to a device adapted to discover its insertion into a SmartRight™ network. The device comprises a communication unit adapted to send Restart messages and a processor adapted to conclude that the device is inserted in the network upon reception of a response to the Restart message by the communication unit.

In a preferred embodiment, the communication unit is adapted to repeatedly send Restart messages. It is advantageous that the communication unit is adapted to keep a random interval between two Restart messages. It is also advantageous that the processor is adapted to inform the communication unit if the device is connected to the network and the communication unit is adapted to keep a first interval between two Restart messages if the device is not connected to the network and a second interval between two Restart messages if the device is connected to the network, wherein the first interval is shorter than the second interval.

In a second preferred embodiment, the device is a Progenitor device and the processor is further adapted to conclude that the Progenitor device is inserted in the network if it receives any SmartRight™ message.

### BRIEF DESCRIPTION OF THE DRAWINGS

Preferred features of the present invention will now be described, by way of example, with reference to the accompanying drawings, in which:
Figure 1 illustrates a SmartRight™ network and a first embodiment of the invention;
Figure 2 illustrates a second embodiment of the invention; and
Figure 3 is a state diagram that illustrates the states of a device according to an embodiment of the invention.

### DETAILED DESCRIPTION OF PREFERRED EMBODIMENTS

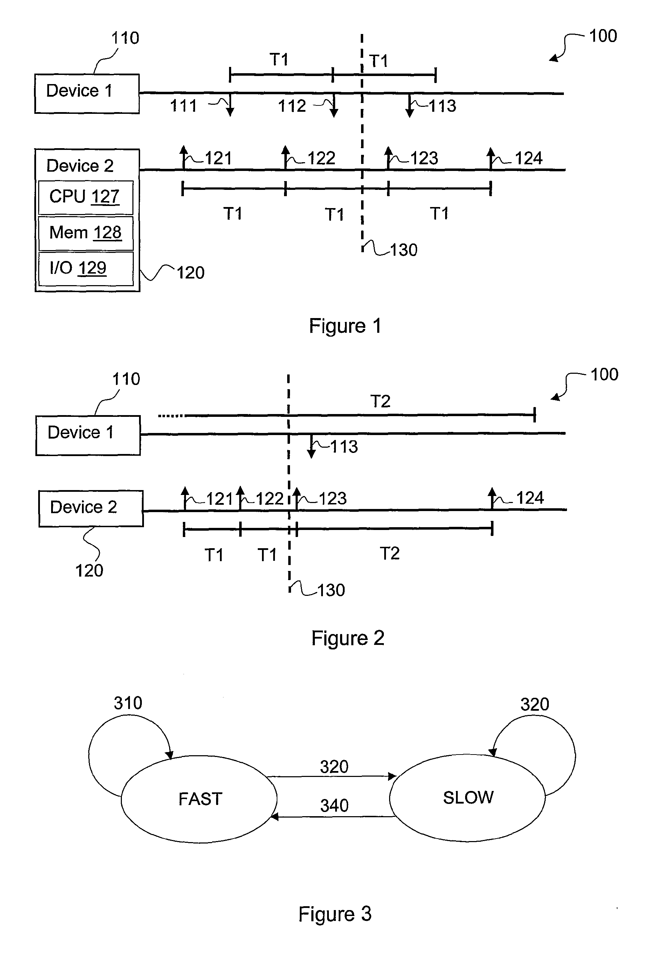

Figure 1 illustrates a device 110 connected to a SmartRight™ network 100 and a second device 120 to be inserted therein. Time runs from the left to the right on the axes. Each device, illustrated only for the unconnected device 120, comprises a processor 127, a memory 128, and a communication unit 129. The processor 127, the memory 128 and the communication unit 129 are adapted to communicate with each other, and the processor 127 is adapted to conclude whether or not the device 120 is connected to the network 100 and also to inform the communication unit 129 of this, and the communication unit 129 is adapted to communicate with other devices, preferably by sending and receiving messages.

In order to discover insertion, a SmartRight™ device regularly sends Restart messages and thereby launches the consistency process. A device that is not connected to a network will not receive any responses from it and will thus conclude that it is unconnected. Conversely, a device that receives a response concludes that it is connected to the network.

This is illustrated in Figure 1, in which the unconnected device 120 sends Restart messages 121, 122, but does not receive any messages in response thereto, as it is not connected to the network 100. The connected device 110 also sends Restart messages 111, 112, but does not receive any responses from the unconnected device.

At 130, the hitherto unconnected device 120 is connected to the network 100. Its next Restart message 123 receives a response 113 from the at least one already connected device 110 and the newly connected device 120 thus concludes that it is connected to the network 100. After connection, a device 110, 120 continues to send Restart messages (e.g. 124) in order to check that it is still connected.

In one embodiment, the Restart messages are sent with a - not necessarily constant, it could also be random - interval T1, which for example may be every 10 seconds. The value of T1 has to be fixed as a compromise between network traffic and reaction speed to the insertion of a new device. A low T1 will ensure that a newly connected device quickly concludes that it is connected, but at the same time may result in important amounts of network traffic from the Restart messages. On the other hand, a high T1 means a higher average time for a device to discover its insertion, while the network traffic from Restart messages is less important.

Figure 2 illustrates an advantageous embodiment for the delay between Restart messages. Figure 2 shows, essentially as in Figure 1, a device 110 connected to a SmartRight™ network 100 and a device 120 to be inserted therein. The unconnected device 120 sends Restart messages 121, 122, 123 with an interval T1. A difference from Figure 1 is that once the previously unconnected device 120 has received a response 113 and concluded that it is connected to the network 100, it switches to an interval T2 between its Restart messages. As the connected device 110 is connected, it sends its Restart messages with an interval T2.

If T2 is much longer than T1, connected devices will send fewer Restart messages, which with a judicious choice of T1 and T2 means a device that connects to the network will discover this quickly, but that the network traffic created by the Restart messages will be low as the connected devices send Restart messages only rarely. As typical examples, T1 shorter than 10 seconds and T2 is 1 minute. As T1, T2 could also be random, both values for example ranging from 1 to 10 seconds, and 30 seconds to 2 minutes, respectively.

Figure 3 is a state diagram that illustrates the two states FAST (corresponding to a delay of T1) and SLOW (corresponding to a delay of T2). A device in the FAST state will send a restart message when T1 has passed (arrow 310) and remain in the FAST state, but it will switch to the SLOW state (arrow 320) when it receives a response to its Restart message. A device in the SLOW state will send a restart message when T2 has passed (arrow 330) and remain in the SLOW state as long as it receives at least one response, but it will switch to the FAST state (arrow 340) when it receives no response to its Restart message.

While the advantageous embodiment solves many problems, a problem still remains when a Progenitor device is newly connected to a network populated with only Sterile card devices. In this case, the Progenitor device sends a Restart message. In this case the Sterile card devices do not respond to the Restart message, which is normal SmartRight™ behaviour. The Progenitor device will continue sending Restart messages with an interval T1 and never switch to the longer interval T2. This could mean unnecessary amounts of network traffic from its Restart messages and certificates.

To avoid this, a Progenitor device will switch from the shorter interval T1 to the longer interval T2 as soon as it detects any SmartRight™ message, not just responses to its Restart messages.

It can thus be appreciated that the present invention improves upon the prior art in that it provides a network independent solution for informing a device of its insertion in a SmartRight™ network.

It will be understood that the present invention has been described purely by way of example, and modifications of detail can be made without departing from the scope of the invention. It will also be understood that a SmartRight™ network should be interpreted as compliant with SmartRight™.

Each feature disclosed in the description and (where appropriate) the claims and drawings may be provided independently or in any appropriate combination. Features may, where appropriate be implemented in hardware, software, or a combination of the two.

Reference numerals appearing in the claims are by way of illustration only and shall have no limiting effect on the scope of the claims.

## Claims

1. A method for discovery of device insertion into a SmartRight™ network (100), the method comprising, at a device (110, 120), the steps of:
sending a Restart message (111, 112, 121, 122, 123, 124); and
concluding that the device (110, 120) is inserted in the network (100) if it receives a response to the Restart message (111, 112, 121, 122, 123, 124).

2. The method as claimed in claim 1, wherein the sending step is repeated continuously.

3. The method as claimed in claim 2, wherein the interval between two Restart messages is random.

4. The method as claimed in claim 2, wherein the interval (T1) between two Restart messages sent by the device when it is not connected to the network is shorter than the interval (T2) between two Restart messages sent by the device when it is connected to the network.

5. The method as claimed in claim 1, wherein, if the device is a Progenitor device, the concluding step further comprises concluding that the Progenitor device is inserted in the network if it receives any SmartRight™ message.

6. A device (110, 120) adapted to discover its insertion into a SmartRight™ network (100), the device comprising:
a communication unit (129) adapted to send Restart messages (111, 112, 121, 122, 123, 124); and
a processor (127) adapted to conclude that the device (110, 120) is inserted in the network (100) upon reception of a response to the Restart message (111, 112, 121, 122, 123, 124) by the communication unit (129).

7. The device as claimed in claim 6, wherein the communication unit is adapted to repeatedly send Restart messages.

8. The device as claimed in claim 7, wherein the communication unit is adapted to keep a random interval between two Restart messages.

9. The device as claimed in claim 7, wherein the processor is adapted to inform the communication unit if the device is connected to the network and the communication unit is adapted to keep a first interval (T1) between two Restart messages if the device is not connected to the network and a second interval (T2) between two Restart messages if the device is connected to the network, wherein the first interval is shorter than the second interval.

10. The device as claimed in claim 6, wherein the device is a Progenitor device and the processor further is adapted to conclude that the Progenitor device is inserted in the network if it receives any SmartRight™ message.
